# EUROPEAN PATENT APPLICATION

(11) **EP 2 659 807 A1**
(43) Date of publication of application: **06.11.2013**
(21) Application number: 12865612.1
(22) Date of filing: 18.01.2012
(51) Int. Cl.: A47J 19/00

(54) **JUICER**

(30) Priority: 17.01.2012 CN 201210013919
(71) Applicant: T.F. Electrical Technology (Shenzhen) Co. Ltd., Shenzhen, Guangdong 518126 (CN)
(72) Inventor: ZHOU, Wenhong, Shenzhen Guangdong 518126 (CN)
(74) Representative: Serjeants LLP
(86) International application number: PCT/CN2012/070549
(87) International publication number: WO 2013/107011

(57) **Abstract**

The present invention provides a juicer comprising a base with a transmission structure, a juicing device located above the base and an upper case disposed above the juicing device, wherein the juicing device comprises: a separator configured to drain the juice and the residue of the juiced food respectively; a filter configured to filter the residue of the juiced food; a rotating head configured to spirally extrude the juiced food, a side wall of the separator is provided with a juice exit, a bottom of the separator is provided with a residue exit, a bottom of the filter is provided with a residue draining hole actively communicated with the residue exit, the rotating head is provided with a spiral sheet, the rotating head is disposed in the separator, the filter is sleeved between the rotating head and the separator, a first driving end of the transmission structure of the base is connected with a center of a lower end of the rotating head, the rotating head rotates reversely relative to the filter. The reduce of the parts may decrease the cost.

## Description

### TECHNICAL FIELD

The present invention relates to a food processing device field, and more particularly, to a juicer.

### BACKGROUND

In the food processing field, the widely application of the juicer brings a colourful enjoyment to the people's dietary life, people may choose various fruit and vegetable to make a mixture fruit juice through a mixer cutting the fruit and vegetable. However this fruit juice is a mixture of the fruit and vegetable juice and the solid residue for the eater, because of containing fruit and vegetable residues such mixed fruit juice has bad taste. There is a juicer which may separate the residue, the juicer separates the juice through the high-speed centrifugation method. But during the high-speed juicer process, the taste and nutrition of fruits and vegetables have been destroyed, and it needs to constantly remove the residue jammed in the strain mesh. Therefore, there is a juicer in the prior art which gets juice by using screw to rotatablely extrude the fruit and vegetable. This juicer has a fixed mesh cylinder and a fixed housing; the juicer extracts the juice through rotating the screw and the rotating brush. This juicer has the disadvantage that: firstly, the inner structure is complicated; the cost is high, a mechanical fault is easily caused because of the complicated mechanical structure; secondly, upon the working procedure of the juicer, the screw extrude the food such as fruit and vegetable, the mesh cylinder is with a fixed status, so it is unable to form an opposite rotation corresponding to the screw rotation direction, the grinding effect of fruits and vegetables is greatly reduced; further, in a high press situation, for example extracting some hard fruit and vegetable, when the fixed end of the mesh cylinder encounters a force and generates a fracture, the mesh cylinder and the screw rotate axially and can't function to extract juice and filter juice, this product implies a defect.

### SUMMARY

The present invention provides a juicer to solve the problem that the cost of the product is high and the product implies a defect in the prior art.

To solve the above mentioned problem, the present invention provides a juicer comprising a base with a transmission structure, a juicing device located above the base and a upper case disposed above the juicing device, wherein the juicing device comprises: a separator configured to drain the juice and the residue of the juiced food respectively; a filter configured to filter the residue of the juiced food; a rotating head configured to spirally extrude the juiced food, a side wall of the separator is provided with a juice exit, a bottom of the separator is provided with a residue exit, a bottom of the filter is provided with a residue draining hole actively communicated with the residue exit, the rotating head is provided with a spiral sheet, the rotating head is disposed in the separator, the filter is sleeved between the rotating head and the separator, a first driving end of the transmission structure of the base is connected with a center of a lower end of the rotating head, the rotating head rotates reversely relative to the filter.

Preferably, the center of the lower end of the rotating head is horizontally provided with a transmission gear, an inner surface of the bottom of the separator is provided with at least one driven gear, an outer surface of the bottom of the filter is provided with a circular inner gear, the driven gear is meshed with transmission gear and the inner gear respectively.

Preferably, the bottom of the filter is provided with a first through hole through which the transmission gear is passed, the inner gear is disposed on the periphery of the first through hole, the bottom of the separator is provided with a second through hole through which the first driving end is passed, the driven gear is disposed next to the second through hole, the transmission gear is passed through the first through hole and meshed with the driven gear, the driven gear is meshed with the inner gear simultaneously.

Preferably, the bottom of the filter is provided with a first through hole through which the transmission gear is passed, the outer surface of the bottom of the filter is provided with a circular inner gear, the inner gear is disposed on the periphery of the first through hole, the bottom of the separator is provided with a second through hole through which the first driving end is passed, the inner surface of the bottom of the separator is provided with at least one driven gear, the driven gear is disposed next to the second through hole, the transmission gear is passed through the first through hole and meshed with the driven gear, the driven gear is meshed with the inner gear simultaneously.

Preferably, the number of the driven gear is two, the two driven gear are symmetrically disposed next to the second through hole.

Preferably, a first ringy groove is disposed between the outer edge of the lower end of the rotating head and the center of the lower end of the rotating head.

Preferably, a downward protrusion is disposed on the outer edge of the lower end of the rotating head.

Preferably, the inner surface of the bottom of the filter is provided with a ringy enclosure whose diameter is larger than the first through hole, the ringy enclosure is disposed on the periphery of the first through hole, and an outer diameter of the ringy enclosure is equal to the diameter of the ringy groove.

Preferably, the residue draining hole is arranged between the ringy enclosure and the lower end of the side wall of the filter.

Preferably, the periphery of the inner gear is provided with a ringy and downward projecting outer edge, the residue draining hole is disposed on the periphery of the ringy and downward projecting outer edge, the periphery of the residue draining hole is provided with a second ringy groove.

Preferably, the periphery of the driven gear of the separator is provided with a third groove for accommodating the ringy and downward projecting outer edge therein.

Preferably, the periphery of the third groove is provided with a ringy projecting edge for accommodating the second groove therein.

Preferably, a residue draining platform is arranged between the ringy projecting edge and the third groove.

Preferably, the residue draining hole of the residue exit is disposed on the residue draining platform.

Preferably, a ringy juice channel is disposed between the ringy projecting edge and the inner side wall of the separator and communicated with the juice exit of the separator.

Preferably, the base is further provided with a second driving end connected with the lower end of the filter.

Preferably, the bottom of the filter is provided with a third through hole through which the first driving end or the center of the lower end of the rotating head is passed, the outer surface of the bottom of the filter is provided with an actuator, the actuator is disposed on the periphery of the third through hole, the actuator is connected with the second driving end.

Preferably, the center of the bottom of the separator is provided with a fourth through hole through which the first driving end and the second driving end is passed.

Preferably, a fourth ringy groove is disposed between the outer edge of the lower end of the rotating head and the center of the lower end of the rotating head.

Preferably, a downward protrusion is disposed on the outer edge of the lower end of the rotating head.

Preferably, the inner surface of the bottom of the filter is provided with a ringy enclosure whose diameter is larger than the third through hole, the ringy enclosure is disposed on the periphery of the third through hole, and the outer diameter of the ringy enclosure is equal to the diameter of the ringy groove.

Preferably, the residue draining hole is arranged between the ringy enclosure and the lower end of the side wall of the filter.

Preferably, the outer surface of the bottom of the filter the periphery of the actuator is provided with a ringy and downward projecting outer edge, the residue draining hole is disposed on the periphery of the ringy and downward projecting outer edge, the periphery of the residue draining hole is provided with a fifth ringy groove.

Preferably, the periphery of the fifth through hole in the inner surface of the bottom of the separator is provided with a sixth groove for accommodating the ringy and downward projecting outer edge therein.

Preferably, the periphery of the sixth groove is provided with a ringy projecting edge for accommodating the fifth ringy groove therein.

Preferably, a residue draining platform is arranged between the ringy projecting edge and the sixth groove.

Preferably, the residue draining hole of the residue exit is disposed on the residue draining platform.

Preferably, a ringy juice channel is disposed between the ringy projecting edge and the inner side wall of the separator and communicated with the juice exit of the separator.

Preferably, the upper case is provided with a feed inlet.

Preferably, a cutting amount controller is disposed above the rotating head, and the cutting amount controller is fan shaped and is fixed below the upper case.

Preferably, a conical cutter is disposed in the upper case, the surface of the cutter is provided with at least one blade, the inner surface of the top of the upper case is provided with an axis hole, the tip part of the conical cutter is disposed in the axis hole, the lower end of the cutter is provided with a connecting axis hole, a transmission rod extends from the center of upper part of the rotating head, the cutting amount controller is provided with a hole through which the transmission rod is passed, the transmission rod is passed through the hole of cutting amount controller and connected with the connecting axis hole.

Preferably, the surface of the cutter is provided with a horizontal blade and/or a horizontal blade and /or an oblique blade.

Preferably, a cutting amount controller is disposed above the rotating head, the cutting amount controller is fan shaped and is fixed on the upper edge of the separator.

Preferably, a conical cutter is disposed in the upper case, the surface of the cutter is provided with at least one blade, the inner surface of the top of the upper case is provided with a axis hole, the tip part of the conical cutter is disposed in the axis hole, the lower end of the cutter is provided with a connecting axis hole, a transmission rod extends from the center of upper part of the rotating head, the cutting amount controller is provided with a hole through which the transmission rod is passed, the transmission rod is passed through the hole of cutting amount controller and communicated with the connecting axis hole, the surface of the cutter is provided with a horizontal blade and/or a horizontal blade and /or a oblique blade.

Preferably, the side wall of the separator is longitudinally provided with a fixing brush tightly contacted with the outer surface of the filter.

Preferably, the value of the upper diameter of the rotating head is larger than the value of the lower diameter of the rotating head.

Preferably, the middle of the outer surface of the filter is provided with a transverse reinforcing ring.

Preferably, the inner surface of the filter is provided with a vertical reinforcing rib.

When the juicer of the present invention is assembled, from top to bottom, there is the base, juicing device and the upper case. From inside to outside, the rotating head, filter and separator are successively assembled to from the juicing device. When the juicer starts to process the food, the food to be juiced is put into the juicer. The rotating head is driven by the first driving end to rotate, the food is helically downward extruded by the rotating head, the food is extruded by the rotating head and the filter and the juice of the food is extracted. The juice is drained through the juice exit disposed on the bottom of the side wall of the separator. The eater may obtain the juice from the juice exit. The food is extruded by the rotating head and filter which rotate in the opposite direction and generates the residue, and then the food is continually rotatablly extruded by the rotating head to the residue draining hole disposed on the bottom of the filter. The food enters into the residue exit during the rotation procedure and the residue is drained out, the working process is finished. Because the rotating head is rotated with a low speed, the juicer doesn't beat with high speed through a sharp mixing knife, but use the rotating head and the filter which are rotated in opposite direction to extrude the food together. Therefore, not only the residue hung on the filter is rubbed down, but also the taste and nutrition of the ingredients juice may be ensured. At the same time with respect to the prior art, a rotation brush rotated reversely to the rotating head or the screw may be reduced. The reduce of the assembly component may not only reduce the cost but also reduce the possibility of occurring a mechanical fault, thereby ensuring the normal operation of the product. Because the filter is rotated in the direction opposite to the rotation direction of the rotating head and is not fixed through a fixing member such as a fixing jaw, it may avoid the situation that that after the fixing member generates a force fracture or a aging fracture the filter and rotating head rotate axially and juicer is completely scrapped. Thereby the implied defect of product may be compensated.

### BRIEF DESCRIPTION OF THE DRAWINGS

FIG. 1 is an exploded view of the juicer according to a first embodiment of the present invention.

FIG. 2 is a top view of the separator of the juicer according to the first embodiment of the present invention.

FIG. 3 is a bottom view of the separator of the juicer according to the first embodiment of the present invention.

FIG. 4 is a cross-section view of the side portion of the separator of the juicer according to the first embodiment of the present invention.

FIG. 5 is a perspective view of the separator of the juicer according to the first embodiment of the present invention.

FIG. 6 is a perspective view of the filter of the juicer according to the first embodiment of the present invention.

FIG. 7 is a bottom view of the filter of the juicer according to the first embodiment of the present invention.

FIG. 8 is a top view of the filter of the juicer according to the first embodiment of the present invention.

FIG. 9 is a cross-section view of the side portion of the filter of the juicer according to the first embodiment of the present invention.

FIG. 10 is a perspective view of the rotating head of the juicer according to the first embodiment of the present invention.

FIG. 11 is a bottom view of the rotating head of the juicer according to the first embodiment of the present invention.

FIG. 12 is a cross-section view of the side portion of the rotating head of the juicer according to the first embodiment of the present invention.

FIG. 13 is a perspective view of the cutter of the juicer according to one embodiment of the present invention.

FIG. 14 is an exploded view of the juicer according to a second embodiment of the present invention.

FIG. 15 is a perspective view of the separator of the juicer according to the second embodiment of the present invention.

FIG. 16 is a perspective view of the filter of the juicer according to the second embodiment of the present invention.

FIG. 17 is a perspective view of the rotating head of the juicer according to the second embodiment of the present invention.

FIG. 18 is a cross-section view of the side portion of the juicing device of the juicer matched with the upper case according to the second embodiment of the present invention.

FIG. 19 is a cross-section view of the side portion of the juicing device of the juicer matched with the upper case according to the third embodiment of the present invention.

FIG. 20 is a perspective view of the juicing device of the juicer matched with the upper case according to the embodiment of the present invention.

### DETAILED DESCRIPTION OF THE PREFERRED EMBODIMENTS

To make the objectives, technical solutions and advantages of the present invention clearer, the present invention will be further described hereafter with reference to the accompany drawings and embodiments. However, it shall be understood that, the embodiments described herein are only intended to illustrate but not to limit the present invention.

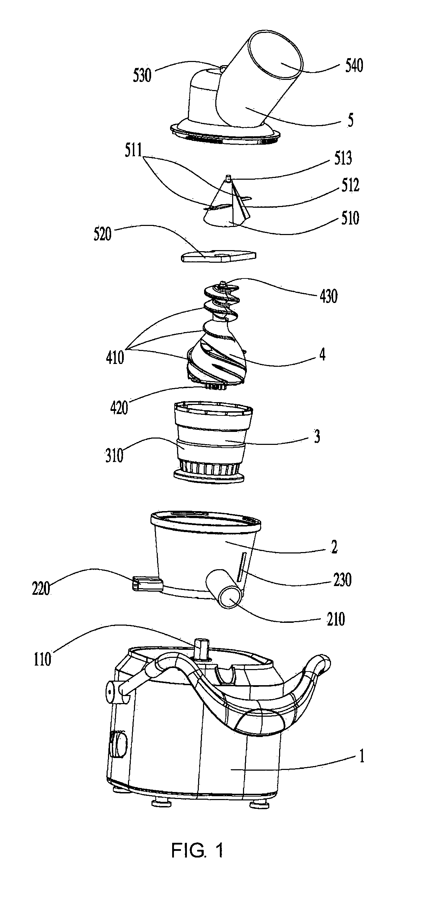

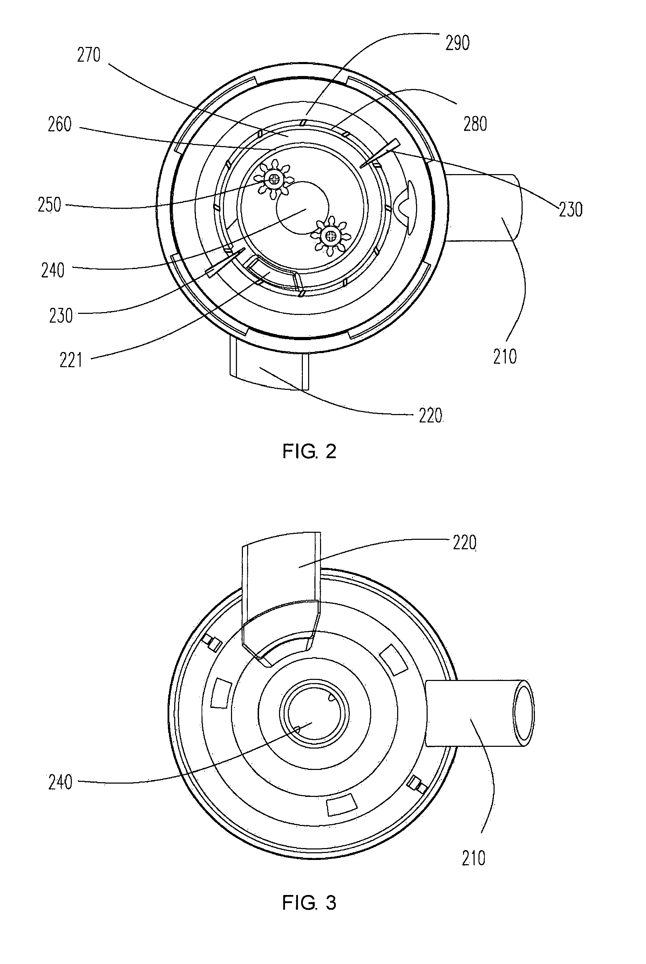

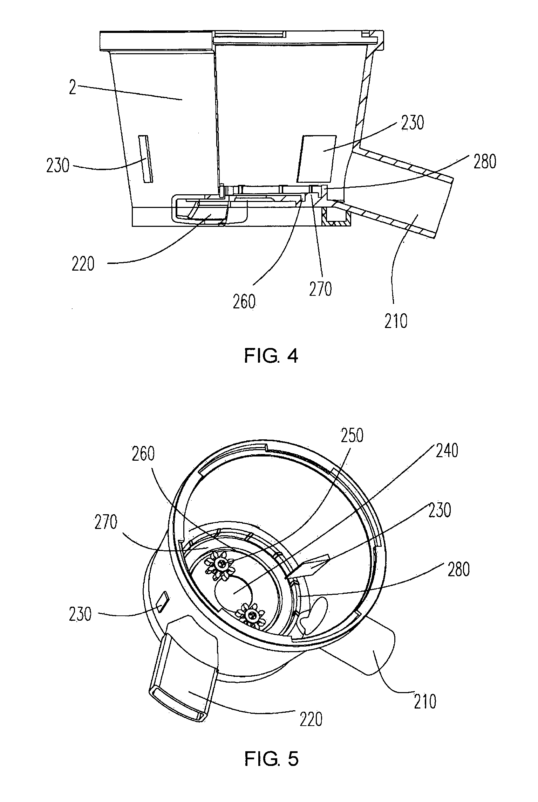

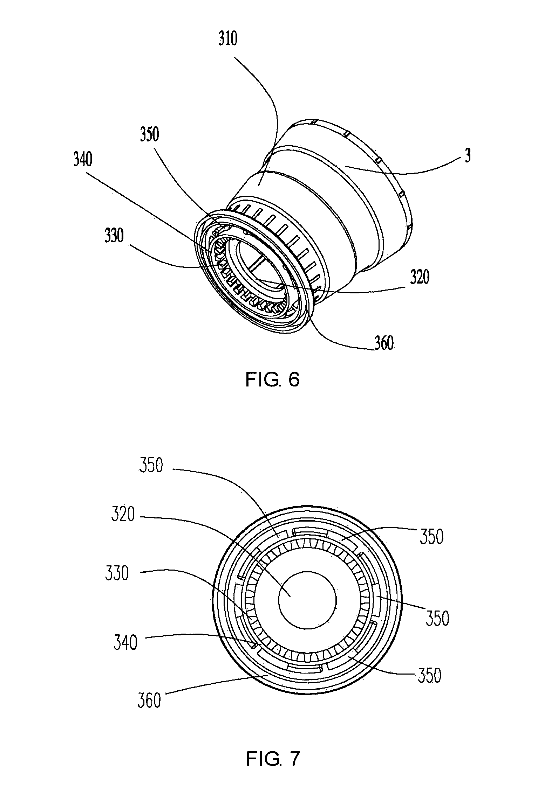

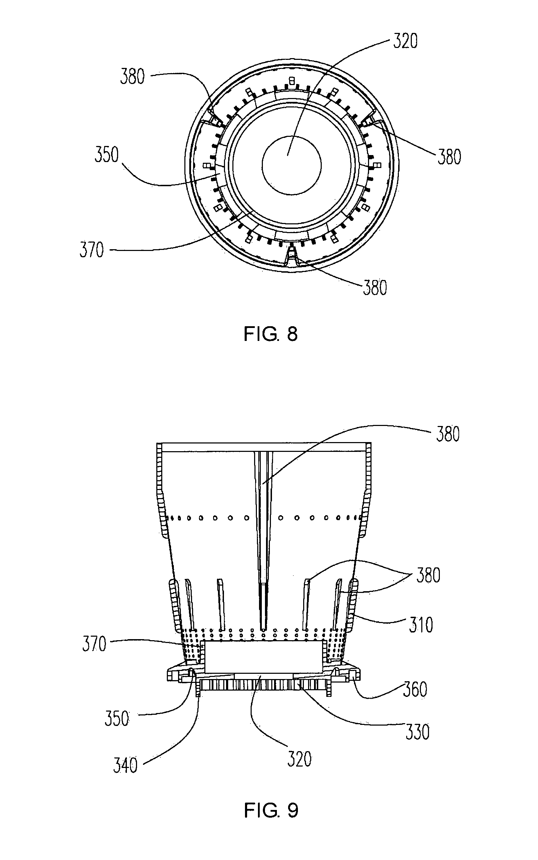

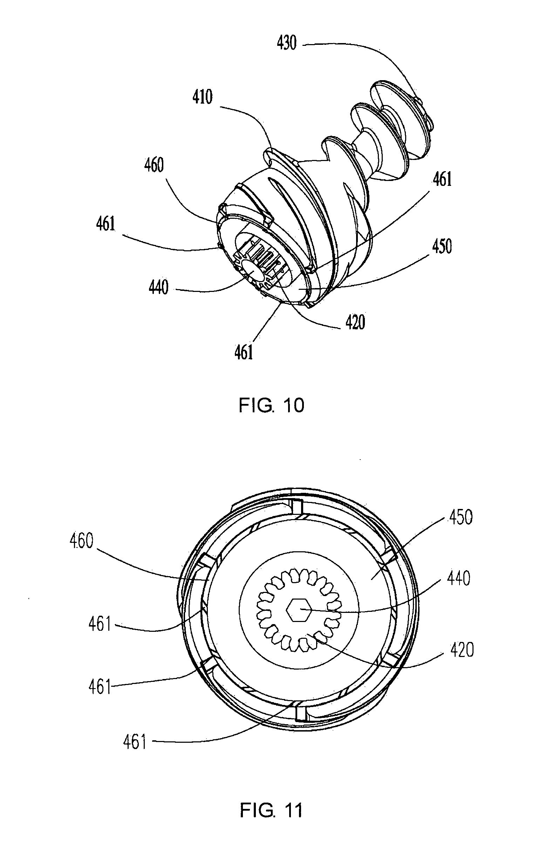

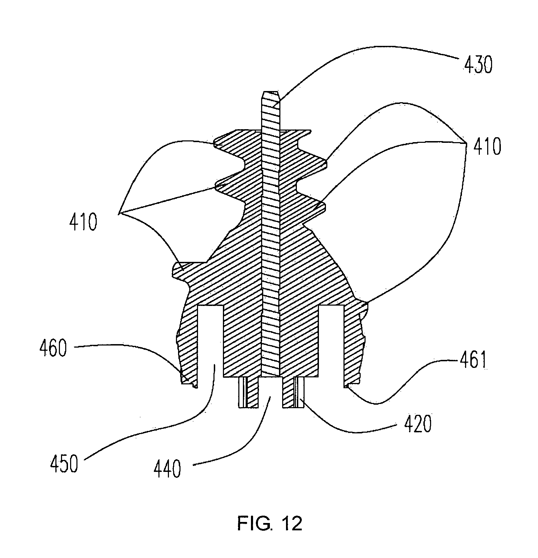

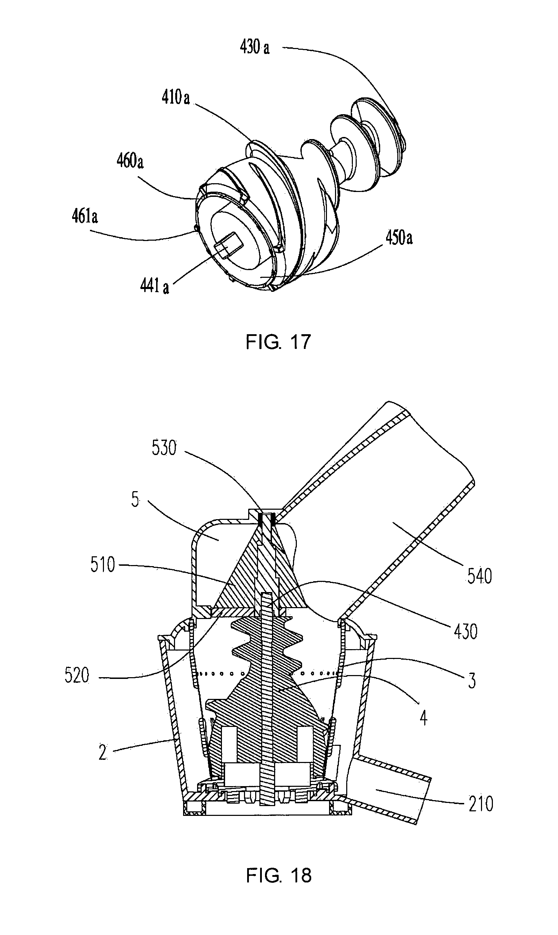

The first embodiment is shown in FIGs 1-13, 18 and 20. In this embodiment of the present invention, a juicer is provided. The juicer includes a base 1 with a transmission structure, a juicing device located above the base 1 and an upper case 5 disposed above the juicing device. The juicing device includes: a separator 2 configured to drain the juice and the residue of the juiced food respectively; a filter 3 configured to filter the residue of the juiced food; a rotating head 4 configured to spirally extrude the juiced food. The side wall of the separator 2 is provided with a juice exit 210, the bottom of the separator 2 is provided with a residue exit 220. The bottom of the filter 3 is provided with a residue draining hole 350 actively communicated with the residue exit 220. The rotating head 4 is provided with a spiral sheet 410, the rotating head 4 is disposed in the separator 2. The filter 3 is sleeved between the rotating head 4 and the separator 2. A first driving end 110 of the transmission structure of the base 1 is connected with the center of the lower end of the rotating head, the rotating head 4 rotates reversely relative to the filter 3. When the juicer of the present invention is assembled, from top to bottom, there is the base 1, juicing device and the upper case 5. From inside to outside, the rotating head 4, filter 3 and separator 2 are successively assembled to form the juicing device. When the juicer starts to process the food, the food to be juiced is put into the juicer. The rotating head 4 is driven by the first driving end 110 to rotate, the food is helically downward extruded by the rotating head 4, the food is extruded by the rotating head 4 and the filter 3 and the juice of the food is extracted. The juice is drained through the juice exit 210 disposed on the bottom of the side wall of the separator 2. The eater may obtain the juice from the juice exit 210. The food is extruded by the rotating head 4 and filter 3 which rotate in the opposite direction and generates the residue, and then the food is continually rotatably extruded by the rotating head 4 to the residue draining hole 350 disposed on the bottom of the filter 3. The food enters into the residue exit 220 during the rotation procedure and the residue is drained out, the working process is finished. Because the rotating head 4 is rotated with a low speed, the juicer doesn't beat with high speed through a sharp mixing knife, but use the rotating head 4 and the filter 3 which are rotated in an opposite direction to extrude the food together. Therefore, not only the residue hung on the filter 3 is rubbed down, but also the taste and nutrition of the ingredients juice may be ensured. At the same time with respect to the prior art, a rotation brush rotated reversely to the rotating head 4 or the screw may be reduced. The reduce of the assembly component may not only reduce the cost but also reduce the possibility of occurring a mechanical fault, thereby ensuring the normal operation of the product. Because the filter 3 is rotated in the direction opposite to the rotation direction of the rotating head 4 and is not fixed through a fixing member such as a fixing jaw, it may avoid the situation that that after the fixing member generates a force fracture or an aging fracture the filter 3 and rotating head 4 rotate axially and juicer is completely scrapped. Thereby the implied defect of product may be compensated.

Further, the center of the lower end of the rotating head 4 is horizontally provided with a transmission gear 420, the inner surface of the bottom of the separator 2 is provided with at least one driven gear 250, the outer surface of the bottom of the filter 3 is provided with a circular inner gear 330, the driven gear 250 is meshed with transmission gear 420 and the inner gear 330 respectively. The center of the transmission gear 420 is provided with a transmission hole 440 or transmission head with a polygon profile connected with the first driving end 110. The first driving end 110 is a polygon projecting head or a concave hole corresponding to the transmission hole 440 or transmission head and then drives the rotating head 4 and avoids a slide. The bottom of the filter 3 is provided with a first through hole 320 through which the transmission gear 420 is passed, the outer surface of the bottom of the filter 3 is provided with a circular inner gear 330, the inner gear 330 is disposed on the periphery of the first through hole 320. The bottom of the separator 2 is provided with a second through hole 240 through which the first driving end 110 is passed, the center of the lower end of the rotating head 4 is horizontally provided with a transmission gear 420, the driven gear 250 is disposed next to the second through hole 240. The transmission gear 420 is passed through the first through hole 320 and meshed with the driven gear 250, the driven gear 250 is meshed with the inner gear 330 simultaneously. When the juicer operates, the first driving end 100 provides a force to drive the transmission hole 440 or transmission head to rotate. The transmission gear 420 is rotated simultaneously and drives the driven gear 250 to rotate reversely. The driven gear 250 is internally meshed with the ringy inner gear 330 disposed on the outer surface of the bottom of the filter 3. The diameter of the driven gear 250 is smaller than the diameter of the inner gear 330 and the driven gear 250 push the inner gear 330 to rotate in the same direction. According to the connecting relationship, the rotating head is rotated to make the spiral sheet 410 rotate downward, meanwhile the filter is rotated reversely on the periphery of the rotating head, therefore a larger extrusion force may be provided and the juicer effect is better.

To make the transmission gear 250 stably drive the inner gear 330, two driven gear 250 are symmetrically disposed next to the second through hole 240, or three driven gear 250 are evenly disposed and inscribed with the second through hole 240. Each driven is meshed with transmission gear 420. The driven gears are not meshed with each other. During the work process, the transmission gear 420 drives the driven gear to rotate reversely and drives the inner gear 330 to rotate.

Further, a first ringy groove 450 is disposed between the outer edge 460 of the lower end of the rotating head 4 and the center of the lower end of the rotating head 4. A downward protrusion 461 is disposed on the outer edge 460 of the lower end of the rotating head 4 to increase the friction between the rotating head 4 and the filter 3 and further crush the residue of the food extruded to the bottom of the rotating head 4. The inner surface of the bottom of the filter 3 is provided with a ringy enclosure 370 whose diameter is larger than the first through hole 320, the ringy enclosure 370 is disposed on the periphery of the first through hole 320, and the outer diameter of the ringy enclosure 370 is equal to the diameter of the ringy groove 450. When the assembly is finished, the inner wall of the ringy groove 450 sleeves the periphery of the ringy enclosure 370. When the juicer works, partial juice of the extruded food can reach the location between the rotating head 4 and the filter 3, the juice is blocked by the outer edge 460 of the rotating head 4 and the ringy enclosure 370 in the rotating head 4 thereby avoiding the juice entering into the first through hole 320 which will affect the normal operation of the juicer. Furthermore, the provided ringy groove 450 may reduce the weight of the rotating head 4, decrease the driving load and reduce the cost.

Further, the residue draining hole 350 is arranged between the ringy enclosure 370 and the lower end of the side wall of the filter 3. Under the function of the downward protrusion 461 disposed on the outer edge 460 of the lower end of the rotating head 4, the food residue is more conveniently extruded to the residue draining hole 350.

Further, the periphery of the inner gear 330 is provided with a ringy and downward projecting outer edge 340, the residue draining hole 350 is disposed on the periphery of the ringy and downward projecting outer edge 340, the periphery of the residue draining hole 350 is provided with a second ringy groove 360. The periphery of the driven gear 250 of the separator 2 is provided with a third groove 260 for accommodating the ringy and downward projecting outer edge 340. Because the outer edge 340 is downward projecting and wraps the inner gear 330 and the driven gear 250 internally meshed with the ringy inner gear 330 to avoid the juice flooding into the working area of the driven gear 250, inner gear and the transmission gear 420.

Further, the periphery of the third groove 260 is provided with a ringy projecting edge 280 for accommodating the second ringy groove 360. When assembled, the second ringy groove 360 is configured to sleeve the ringy projecting edge 280. The ringy projecting edge 280 functions to on one hand fix the position of the filter 3 and on the other hand avoid the juice externally extracted returning to the filter 3.

Further, a residue draining platform 270 is arranged between the ringy projecting edge 280 and the third groove 260. The residue draining hole 221 of the residue exit 220 is disposed on the residue draining platform 270. When the food residue pass the residue draining hole 350 disposed on the bottom of the filter 3 and reach the residue draining platform 270, the bottom of the continually rotated filter 3 push the residue to the residue draining hole 221 and the residue is drain out of the residue exit 220. A ringy juice channel 290 is disposed between the ringy projecting edge 280 and the inner side wall of the separator 2 collects the juice filtered from the outer surface of the filter 3. The juice is drained out of the juice exit 210 through communicating the ringy juice channel 290 with the juice exit of the separator.

Further, the upper case 5 is provided with a material entrance 540, which save the step of opening the upper case 5. The user may put food into the juicer through the feed inlet 540. It increases the safety insurance and avoid the danger which is caused when the user opens the upper case 5 to put the food into the juicer.

Further, a cutting amount controller 520 is disposed above the rotating head 4, the cutting amount controller is fan shaped and is fixed below the upper case. Upon the actual operation, after the food enters into the feed inlet 540, the food is blocked by the cutting amount controller 520 to avoid an excess which may affect the juicing effect of the rotating head.

Further, a conical cutter 510 is disposed in the upper case 5, the surface of the cutter 510 is provided with at least one blade, the inner surface of the top of the upper case 5 is provided with an axis hole 530, the tip part 153 of the conical cutter 510 is disposed in the axis hole 530, the lower end of the cutter 510 is provided with a connecting axis hole, a transmission rod 430 extends from the center of upper part of the rotating head 4, the cutting amount controller 520 is provided with a hole through which the transmission rod is passed 430, the transmission rod 430 is passed through the hole of cutting amount controller 520 and connected with the connecting axis hole. During the work procedure of the juicer, the rotating head 4 is rotated and drives the cutter 510 to rotate, the food enters the upper case 5 through the feed inlet 540 and is firstly preprocessed by the cutter 510. Then the large food is cut into small pieces. The small pieces reach the extrusion area of the rotating head 4 through the cutting amount controller 520 to be juiced.

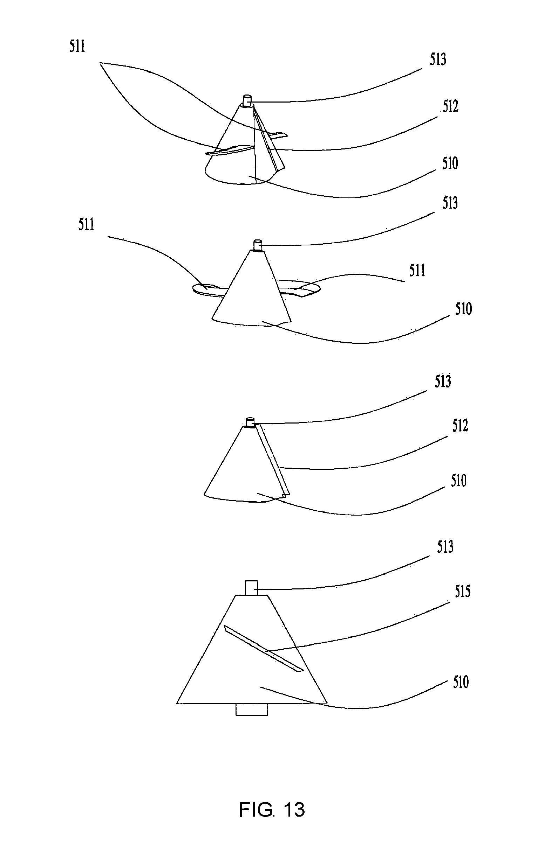

Further, referring to FIG.13, to increase the cutting effect of the cutter 510 for the food, the surface of the cutter 510 is provided with a horizontal blade 511 and/or a horizontal blade 512and /or an oblique blade 515, or is provided with the combination of the three blades or provided with two blades of the three blades. The angle between the oblique blade 515 and the horizontal surface is in the range of 10-80 degrees. The angle is preferably 30 degree.

Further, the side wall of the separator 2 is longitudinally provided with a fixing brush 230 tightly contacting with the outer surface of the filter 3. When the mesh of the filter 3 is blocked, after the outer surface of the filter 3 contacts the fixing brush 230, the blocked material is swept by the fixing brush and returns to the filter to be further extruded and finally forms the residue and is drained out. It useful for the filter 3 to separate out the juice more easily.

Further, the value of the upper diameter of the rotating head 4 is larger than the value of the lower diameter of the rotating head. The rotating head 4 may preprocess to the large food to improve the extrusion efficiency of the rotating head 4.

Preferably, the middle of the outer surface of the filter 3 is provided with a transverse reinforcing ring 310. Because the filter generally has the flexibility, disposing the transverse reinforcing ring 310 in the middle of the outer surface of the filter 3 helps to improve extrusion resistance of the filter 3 and avoid a deformation.

Preferably, the inner surface of the filter 3 is provided with a vertical reinforcing rib 380. The reinforcing rib 380 enhances the strength of the filter 3 and meanwhile forms a composition of forces with the rotating head to cut the extruded food better thereby increasing the juicing efficiency.

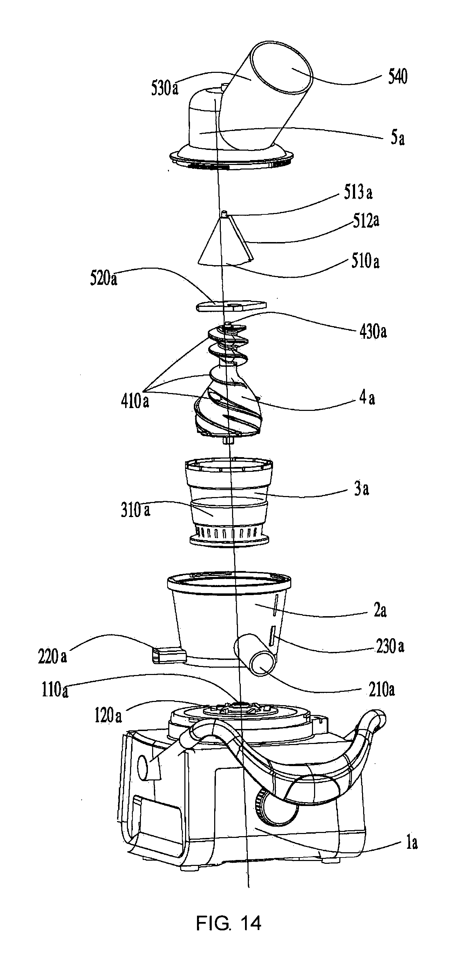

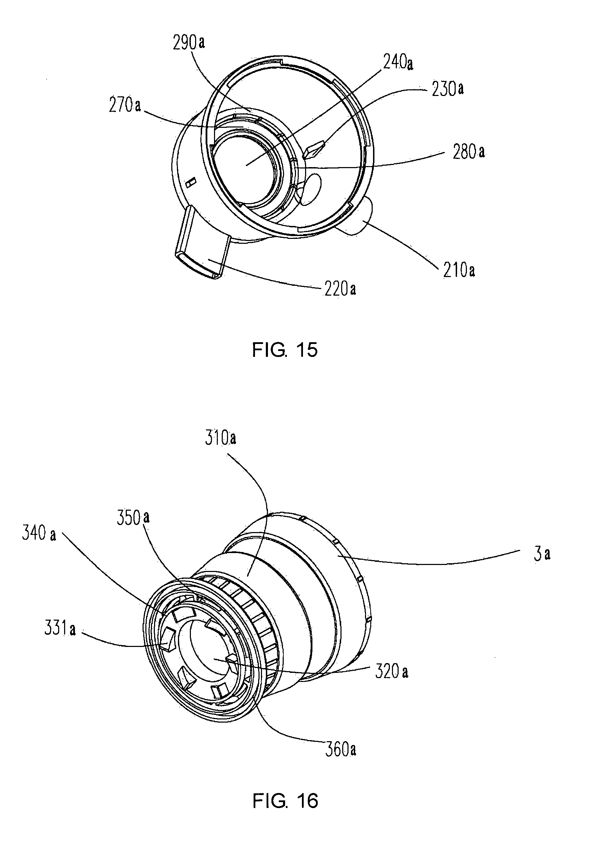

The second embodiment is shown in FIGs 14-17. This embodiment provides a juicer, compared with the first embodiment, the base 1a is further provided with a second driving end 120a connected with the lower end of the filter 3a. The second driving end 120a drives the filter to rotate in the same direction or opposite directions of the rotating head 4a to obtain a larger extrusion force, and when under the situation that the food is blocked, the second driving end 120a may drives the filter to rotate in the same direction of the rotating head 4a to avoid the breakdown of the juicer. Meanwhile, when the first driving end 110a or the second driving end 120a doesn't work, the other driving end may continually finish the work. Furthermore, the bottom of the filter 3a is provided with a third through hole through 320a which the first driving end 110a or the center of the lower end of the rotating head 4a is passed, the outer surface of the bottom of the filter 3a is provided with a actuator 331 a, the actuator 331 a is disposed on the periphery of the third through hole 320a, the actuator 331 a is connected with the second driving end 120a. The center of the bottom of the separator 2a is provided with a fourth through hole 240a through which the first driving end 110a and the second driving end 120a is passed. Through the above the connecting structure, when the juicer is assembled completely, the actuator 331 is independently driven by the second driving end 120a, the transmission part of the transmission gear, driven gear and the inner gear of the first embodiment is reduced, which makes the mechanical part of the juicer more concise, the assembly more simple and the fault rate more lower.

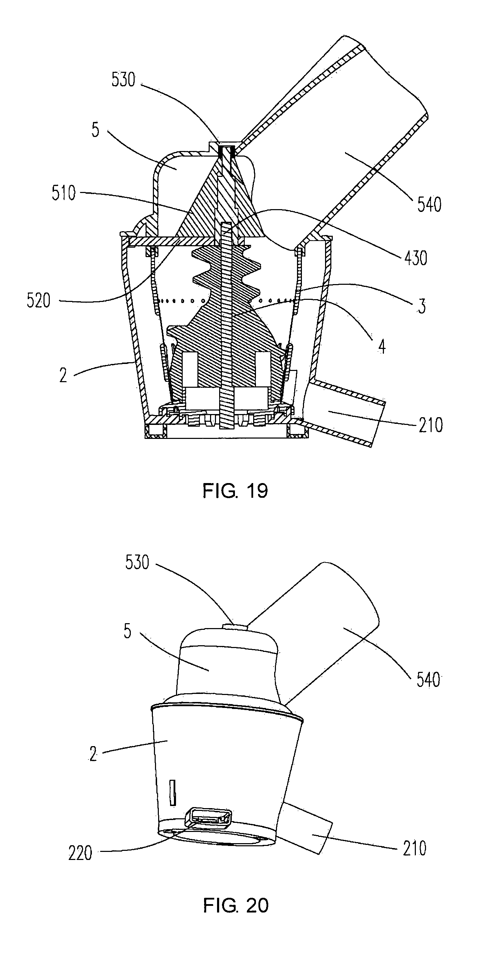

The third embodiment is shown in FIGs 19-20. This embodiment provides a juicer, compared with the above embodiments, a cutting amount controller 520 is disposed above the rotating head 4, the cutting amount controller 520 is fan shaped and is fixed on the upper edge of the separator 2. After the user assembles the cutting amount controller 520 on the upper edge of the separator 2, the upper case 5 and the separator 2 are closely assembled, it may avoid the problem may appear in the above embodiment that when the upper case 5 is closed the cutting amount controller 520 is instable and easy to drop and it is more convenient for the user to assemble juicer and disassemble the juicer to clean it.

What described above are only preferred embodiments of the present disclosure but are not intended to limit the scope of the present disclosure. Accordingly, any equivalent structural or process flow modifications that are made on basis of the specification and the attached drawings or any direct or indirect applications in other technical fields shall also fall within the scope of the present disclosure.

## Claims

1. A juicer comprising a base with a transmission structure, a juicing device located above the base and an upper case disposed above the juicing device, wherein the juicing device comprises:
a separator configured to drain the juice and the residue of the juiced food respectively;
a filter configured to filter the residue of the juiced food;
a rotating head configured to spirally extrude the juiced food,
a side wall of the separator is provided with a juice exit, a bottom of the separator is provided with a residue exit, a bottom of the filter is provided with a residue draining hole actively communicated with the residue exit, the rotating head is provided with a spiral sheet, the rotating head is disposed in the separator, the filter is sleeved between the rotating head and the separator, a first driving end of the transmission structure of the base is connected with a center of a lower end of the rotating head, the rotating head rotates reversely relative to the filter.

2. The juicer of claim 1, wherein the center of the lower end of the rotating head is horizontally provided with a transmission gear, an inner surface of the bottom of the separator is provided with at least one driven gear, an outer surface of the bottom of the filter is provided with a circular inner gear, the driven gear is meshed with transmission gear and the inner gear respectively.

3. The juicer of claim 2, wherein the bottom of the filter is provided with a first through hole through which the transmission gear is passed, the inner gear is disposed on the periphery of the first through hole, the bottom of the separator is provided with a second through hole through which the first driving end is passed, the driven gear is disposed next to the second through hole, the transmission gear is passed through the first through hole and meshed with the driven gear, the driven gear is meshed with the inner gear simultaneously.

4. The juicer of claim 3, wherein the number of the driven gear is two, the two driven gear are symmetrically disposed next to the second through hole.

5. The juicer of claim 3, wherein a first ringy groove is disposed between the outer edge of the lower end of the rotating head and the center of the lower end of the rotating head.

6. The juicer of claim 5, wherein a downward protrusion is disposed on the outer edge of the lower end of the rotating head.

7. The juicer of claim 6, wherein the inner surface of the bottom of the filter is provided with a ringy enclosure whose diameter is larger than the first through hole, the ringy enclosure is disposed on the periphery of the first through hole, and an outer diameter of the ringy enclosure is equal to the diameter of the ringy groove.

8. The juicer of claim 7, wherein the residue draining hole is arranged between the ringy enclosure and the lower end of the side wall of the filter.

9. The juicer of claim 8, wherein the periphery of the inner gear is provided with a ringy and downward projecting outer edge, the residue draining hole is disposed on the periphery of the ringy and downward projecting outer edge, the periphery of the residue draining hole is provided with a second ringy groove.

10. The juicer of claim 9, wherein the periphery of the driven gear of the separator is provided with a third groove for accommodating the ringy and downward projecting outer edge therein.

11. The juicer of claim 10, wherein the periphery of the third groove is provided with a ringy projecting edge for accommodating the second groove therein.

12. The juicer of claim 11, wherein a residue draining platform is arranged between the ringy projecting edge and the third groove.

13. The juicer of claim 12, wherein the residue draining hole of the residue exit is disposed on the residue draining platform.

14. The juicer of claim 13, wherein a ringy juice channel is disposed between the ringy projecting edge and the inner side wall of the separator and communicated with the juice exit of the separator.

15. The juicer of claim 1, wherein the base is further provided with a second driving end connected with the lower end of the filter.

16. The juicer of claim 15, wherein the bottom of the filter is provided with a third through hole through which the first driving end or the center of the lower end of the rotating head is passed, the outer surface of the bottom of the filter is provided with an actuator, the actuator is disposed on the periphery of the third through hole, the actuator is connected with the second driving end.

17. The juicer of claim 16, wherein the center of the bottom of the separator is provided with a fourth through hole through which the first driving end and the second driving end is passed.

18. The juicer of claim 17, wherein a fourth ringy groove is disposed between the outer edge of the lower end of the rotating head and the center of the lower end of the rotating head.

19. The juicer of claim 18, wherein a downward protrusion is disposed on the outer edge of the lower end of the rotating head.

20. The juicer of claim 19, wherein the inner surface of the bottom of the filter is provided with a ringy enclosure whose diameter is larger than the third through hole, the ringy enclosure is disposed on the periphery of the third through hole, and the outer diameter of the ringy enclosure is equal to the diameter of the ringy groove.

21. The juicer of claim 20, wherein the residue draining hole is arranged between the ringy enclosure and the lower end of the side wall of the filter.

22. The juicer of claim 21, wherein the outer surface of the bottom of the filter the periphery of the actuator is provided with a ringy and downward projecting outer edge, the residue draining hole is disposed on the periphery of the ringy and downward projecting outer edge, the periphery of the residue draining hole is provided with a fifth ringy groove.

23. The juicer of claim 22, wherein the periphery of the fifth through hole in the inner surface of the bottom of the separator is provided with a sixth groove for accommodating the ringy and downward projecting outer edge therein.

24. The juicer of claim 23, wherein the periphery of the sixth groove is provided with a ringy projecting edge for accommodating the fifth ringy groove therein.

25. The juicer of claim 24, wherein a residue draining platform is arranged between the ringy projecting edge and the sixth groove.

26. The juicer of claim 25, wherein the residue draining hole of the residue exit is disposed on the residue draining platform.

27. The juicer of claim 26, wherein a ringy juice channel is disposed between the ringy projecting edge and the inner side wall of the separator and communicated with the juice exit of the separator.

28. The juicer of any of claim 1-27, wherein the upper case is provided with a feed inlet.

29. The juicer of claim 28, wherein a cutting amount controller is disposed above the rotating head, and the cutting amount controller is fan shaped and is fixed below the upper case.

30. The juicer of claim 29, wherein a conical cutter is disposed in the upper case, the surface of the cutter is provided with at least one blade, the inner surface of the top of the upper case is provided with an axis hole, the tip part of the conical cutter is disposed in the axis hole, the lower end of the cutter is provided with a connecting axis hole, a transmission rod extends from the center of upper part of the rotating head, the cutting amount controller is provided with a hole through which the transmission rod is passed, the transmission rod is passed through the hole of cutting amount controller and connected with the connecting axis hole.

31. The juicer of claim 30, wherein the surface of the cutter is provided with a horizontal blade and/or a horizontal blade and /or an oblique blade.

32. The juicer of claim 28, wherein a cutting amount controller is disposed above the rotating head, the cutting amount controller is fan shaped and is fixed on the upper edge of the separator.

33. The juicer of claim 32, wherein a conical cutter is disposed in the upper case, the surface of the cutter is provided with at least one blade, the inner surface of the top of the upper case is provided with an axis hole, the tip part of the conical cutter is disposed in the axis hole, the lower end of the cutter is provided with a connecting axis hole, a transmission rod extends from the center of upper part of the rotating head, the cutting amount controller is provided with a hole through which the transmission rod is passed, the transmission rod is passed through the hole of cutting amount controller and communicated with the connecting axis hole, the surface of the cutter is provided with a horizontal blade and/or a horizontal blade and /or a oblique blade.

34. The juicer of any of claim 1-27, wherein the side wall of the separator is longitudinally provided with a fixing brush tightly contacted with the outer surface of the filter.

35. The juicer of any of claim 1-27, wherein the value of the upper diameter of the rotating head is larger than the value of the lower diameter of the rotating head.

36. The juicer of any of claim 1-27, wherein the middle of the outer surface of the filter is provided with a transverse reinforcing ring.

37. The juicer of any of claim 36, wherein the inner surface of the filter is provided with a vertical reinforcing rib.
